# DEMANDE DE BREVET EUROPEEN

(11) **EP 2 317 374 A1**
(43) Date de publication de la demande: **04.05.2011**
(21) Numéro de dépôt: 09173192.7
(22) Date de dépôt: 15.10.2009
(51) Int. Cl.: G02F 1/1347, G02F 1/133, G02F 1/139

(54) **Objet portable équipé d'un dispositif d'affichage à cristal liquide à inversion de contraste**

(71) Demandeur: EM Microelectronic-Marin SA, 2074 Marin (CH)
(72) Inventeur: Grosjacques, Emile, 2016, Cortaillod (CH)
(74) Mandataire: Ravenel, Thierry Gérard Louis

(57) **Abrégé**

Objet portable comprenant un dispositif d'affichage à cristal liquide transflectif à inversion de contraste, caractérisé en ce qu'il comprend des moyens de mesure (42) du degré de luminosité ambiante ainsi qu'une unité de commande (48) qui commande la commutation du dispositif d'affichage à cristal liquide (1) entre son premier état de commutation dans lequel il présente un contraste d'affichage négatif et son second état de commutation dans lequel il présente un contraste d'affichage positif en fonction de la valeur du signal fourni par les moyens de mesure du degré de luminosité ambiante.

## Description

La présente invention concerne un dispositif d'affichage à cristal liquide à contraste négatif. Plus précisément, la présente invention concerne un dispositif d'affichage à cristal liquide à contraste négatif du type transflectif, c'est-à-dire du type comprenant une couche suffisamment réflective pour réfléchir la lumière ambiante et toutefois suffisamment mince pour laisser passer la lumière produite par un dispositif de rétro-éclairage.

Un dispositif d'affichage à cristal liquide à contraste positif présente les informations en sombre sur un fond clair. Inversement, un dispositif d'affichage à cristal liquide à contraste négatif présente les informations en clair sur un fond sombre.

On peut, notamment pour des raisons esthétiques, vouloir utiliser un dispositif d'affichage à cristal liquide transflectif à contraste négatif. Dans un environnement modérément éclairé tel que la pièce d'un appartement, la lisibilité des informations par réflexion de la lumière ambiante est satisfaisante. De même, dans la pénombre, les informations peuvent être lues sans difficulté en éclairant le dispositif d'affichage par l'arrière. Par contre, la lecture des informations dans un endroit fortement éclairé tel que dans une rue se révèle problématique. En effet, en raison des phénomènes de diffusion de la lumière qui se réfléchit sur la face arrière du dispositif d'affichage à contraste négatif, on observe d'importants phénomènes de parallaxe qui rendent les informations difficiles, voire impossibles à lire.

Pour remédier à ce problème, une solution consisterait à utiliser un dispositif d'affichage à cristal liquide à contraste positif, c'est-à-dire affichant les informations en sombre sur un fond clair. En effet, en pleine lumière, les informations affichées de cette façon sont parfaitement visibles. Par contre, la lisibilité des informations diminue considérablement lorsque le dispositif d'affichage à contraste positif est rétro-éclairé.

L'idéal serait donc de pouvoir disposer d'un dispositif d'affichage à cristal liquide qui soit à contraste positif lorsqu'il se trouve dans un environnement fortement éclairé et qui soit à contraste négatif lorsqu'il se trouve dans un endroit sombre et qui reste à contraste négatif quand il n'est pas employé.

Un tel dispositif d'affichage à cristal liquide est connu par la demande de brevet européen EP 1 128 240 qui décrit un dispositif d'affichage à cristal liquide du type transflectif, c'est-à-dire dont les informations affichées par un tel dispositif d'affichage peuvent être éclairées soit par réflexion de la lumière ambiante, soit au moyen d'un dispositif de rétro-éclairage, ce dispositif d'affichage à cristal liquide étant à contraste positif dans un premier état, et à contraste négatif dans un second état.

Plus précisément, le dispositif d'affichage à cristal liquide décrit dans la demande de brevet européen susmentionnée comprend une valve optique et une cellule d'affichage à cristal liquide nématique en hélice, l'ensemble formé par la valve optique et la cellule d'affichage étant disposé entre deux polariseurs croisés, c'est-à-dire dont les directions de polarisation de la lumière sont croisées. La valve optique est formée par deux substrats s'étendant parallèlement et à distance l'un de l'autre, ces deux substrats étant réunis l'un avec l'autre par un cadre de scellement qui délimite un volume étanche pour le confinement du cristal liquide, une électrode et une contre-électrode correspondante étant respectivement structurées sur la face arrière du substrat avant et sur la face avant du substrat arrière. La cellule d'affichage à cristal liquide présente une structure proche de celle de la valve optique. Elle est formée de deux substrats avant et arrière s'étendant parallèlement et à distance l'un de l'autre, ces deux substrats étant réunis entre eux par un cadre de scellement qui délimite un volume pour le confinement du cristal liquide nématique en hélice. La cellule d'affichage se distingue de la valve optique uniquement en ce qu'elle comprend un jeu d'électrodes et de contre-électrodes correspondantes par exemple disposées selon un arrangement matriciel qui permettent d'afficher des éléments d'information. Enfin, la valve optique et la cellule d'affichage à cristal liquide sont disposées entre deux polariseurs dont les directions de polarisation de la lumière sont croisées, le polariseur disposé du côté opposé à celui par lequel la lumière ambiante pénètre dans le dispositif d'affichage étant de type transflectif, c'est-à-dire suffisamment réfléchissant pour pouvoir réfléchir la lumière ambiante, mais néanmoins suffisamment mince pour pouvoir laisser passer la lumière produite par un dispositif de rétro-éclairage disposé sous le polariseur transflectif.

En supposant que la valve optique soit disposée au dessus de la cellule d'affichage, le fonctionnement du dispositif d'affichage selon l'invention est le suivant. Dans un premier état de commutation, la direction de polarisation de la lumière qui est polarisée linéairement par le polariseur avant est tournée de 90° par le cristal liquide renfermé dans la valve optique, puis est à nouveau tournée de 90° par le cristal liquide renfermé dans la cellule d'affichage en dehors des zones d'affichage de cette cellule d'affichage et est finalement absorbée par le polariseur arrière. L'affichage se fait donc en clair sur un fond sombre, ce qui signifie que dans le premier état de commutation, le dispositif d'affichage à cristal liquide est du type à contraste négatif. Ainsi, dans le premier état de commutation, le fonctionnement du dispositif d'affichage est optimal lorsqu'il est rétro-éclairé.

Dans un second état de commutation, la direction de polarisation de la lumière qui est polarisée linéairement par le premier polariseur placé à l'avant du dispositif d'affichage selon l'invention n'est pas tournée lorsqu'elle traverse le volume de cristal liquide renfermé dans la valve optique, puis est tournée de 90° lorsqu'elle traverse la cellule d'affichage à cristal liquide et est donc finalement réfléchie par le polariseur placé à l'arrière du dispositif d'affichage. L'affichage se fait donc en sombre sur un fond clair, ce qui signifie que dans le second état de commutation, le dispositif d'affichage à cristal liquide est du type à contraste positif. Ainsi, dans le second état de commutation, le fonctionnement du dispositif d'affichage est optimal lorsqu'il est éclairé par la lumière ambiante.

La présente invention a pour but de procurer un objet portable équipé du dispositif d'affichage à cristal liquide décrit ci-dessus et comprenant des moyens qui soient capables de déterminer, en fonction des conditions d'illumination, si le dispositif d'affichage doit être commuté dans son état où il est à contraste positif ou dans son état où il est à contraste négatif.

A cet effet, la présente invention concerne un objet portable équipé d'un dispositif d'affichage à cristal liquide transflectif présentant un contraste négatif dans un premier état de commutation, et un contraste positif dans un second état de commutation, l'objet portable comprenant en outre des moyens de détection du degré de luminosité ambiante ainsi qu'une unité de commande qui commande la commutation du dispositif d'affichage dans l'un ou l'autre de ses états à contraste positif ou à contraste négatif en fonction des résultats de la mesure du degré de luminosité ambiante qui lui sont fournis par les moyens de détection.

La présente invention procure donc un objet portable équipé d'un dispositif d'affichage à cristal liquide qui, selon l'état de commutation dans lequel il se trouve, sera alternativement à contraste négatif ou à contraste positif et dont le fonctionnement pourra ainsi être optimisé suivant les conditions d'éclairement. Dans un environnement sombre, on placera le dispositif d'affichage dans l'état où il présente un contraste négatif car l'on sait qu'un dispositif d'affichage à cristal liquide à contraste négatif fonctionne très bien lorsqu'il est rétro-éclairé. Au contraire, dans un environnement lumineux, on placera le dispositif d'affichage dans l'état où il présente un contraste positif car l'on sait qu'un dispositif à cristal liquide à contraste positif fonctionne très bien lorsque la lumière ambiante se réfléchit sur le polariseur placé à l'arrière dudit dispositif d'affichage.

Ainsi, lorsque le porteur par exemple de la montre voudra consulter les informations fournies par le dispositif d'affichage à cristal liquide selon l'invention, il appuiera sur un moyen de commande tel qu'un bouton-poussoir. En réponse à cette instruction, l'unité de commande va consulter le signal fourni par les moyens de détection du degré de luminosité ambiante et, en fonction de la valeur de ce signal, va en déduire si la montre se trouve dans un endroit fortement ou faiblement éclairé. Suivant le cas, l'unité de commande va commuter le dispositif d'affichage à cristal liquide soit dans l'état où son contraste est positif, soit dans l'état où son contraste est négatif et commander, le cas échéant, l'allumage du dispositif de rétro-éclairage.

La présente invention procure donc un objet portable comprenant un dispositif d'affichage à cristal liquide dont le fonctionnement est en permanence optimisé en fonction des conditions d'éclairage ambiant. L'utilisateur de l'objet portable est ainsi assuré de pouvoir toujours lire les informations affichées par le dispositif d'affichage à cristal liquide dans les meilleures conditions. Par ailleurs, l'optimisation du mode d'affichage des informations en fonction des conditions de luminosité ambiante (passage du dispositif d'affichage dans son mode à contraste positif) permet d'effectuer des économies d'énergie, ce qui est très utile dans le cas d'un objet portable de petites dimensions tel qu'une montre-bracelet dont les réserves en énergie sont nécessairement limitées.

D'autres caractéristiques et avantages de la présente invention ressortiront plus clairement de la description détaillée qui suit d'un mode de réalisation du dispositif d'affichage à cristal liquide selon l'invention, cet exemple étant donné à titre purement illustratif et non limitatif seulement, en liaison avec le dessin annexé sur lequel :
- les figures 1A et 1B sont des vues schématiques en coupe du dispositif d'affichage à cristal liquide selon l'invention commuté dans l'état où il présente respectivement un contraste d'affichage négatif et un contraste d'affichage positif ;
- la figure 2 est une vue schématique de dessus d'une montre équipée d'un dispositif d'affichage selon l'invention, et
- la figure 3 et un schéma bloc représentant l'unité de commande qui, sur la base des informations qui lui sont fournies par un détecteur de lumière, adapte le contraste du dispositif d'affichage.

La présente invention part du constat qu'en fonction des conditions d'éclairage ambiant, les informations affichées par un dispositif d'affichage à cristal liquide sont mieux lisibles selon que le dispositif d'affichage à cristal liquide est à contraste positif ou négatif. La présente invention a donc recours à un dispositif d'affichage à cristal liquide qui présente un contraste négatif dans un premier état de commutation, et un contraste positif dans un second état de commutation. Lorsque le dispositif d'affichage est dans son premier état où il présente un contraste négatif, son fonctionnement est optimal dans un environnement sombre, l'éclairage des informations affichées étant assuré par la lumière produite par un dispositif de rétro-éclairage disposé à l'arrière du dispositif d'affichage. Lorsque le dispositif d'affichage est dans son second état où il présente un contraste positif, son fonctionnement est optimal dans un environnement lumineux, l'éclairage des informations affichées étant assuré par réflexion de la lumière ambiante sur un réflecteur placé à l'arrière du dispositif d'affichage.

La présente invention procure donc un objet portable muni d'un dispositif d'affichage du genre décrit ci-dessus, cet objet portable comprenant une unité de commande qui commande la commutation du dispositif d'affichage à cristal liquide de son premier état dans lequel il présente un contraste négatif à son second état dans lequel il présente un contraste positif et inversement en fonction des informations relatives au degré de luminosité ambiante qui lui sont fournies par des moyens de détection montés dans l'objet portable.

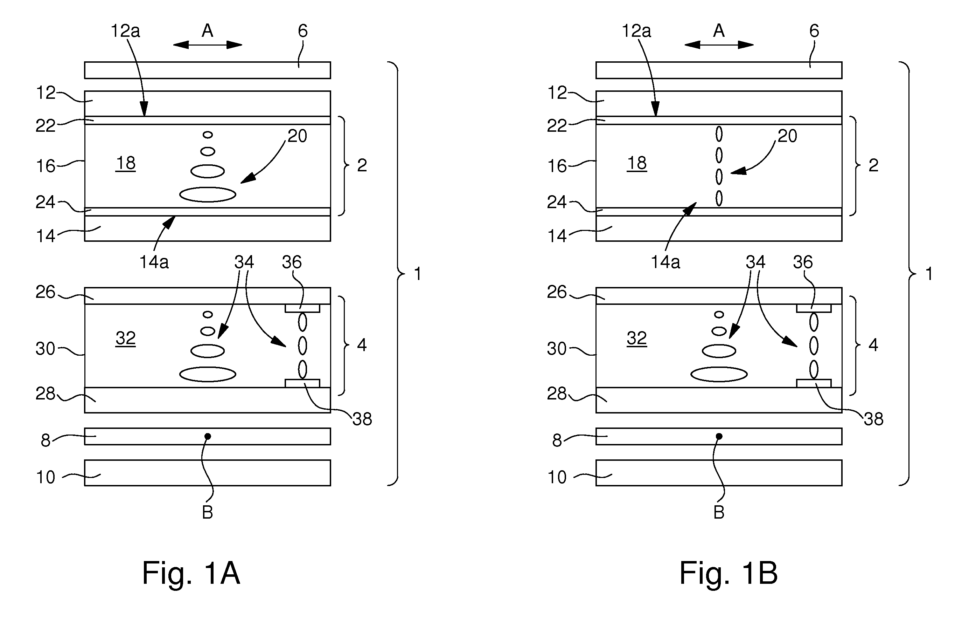

Désigné dans son ensemble par la référence numérique générale 1, le dispositif d'affichage à cristal liquide utilisé dans le cadre de l'invention est représenté schématiquement en coupe sur la figure 1A. Il comprend une valve optique 2 disposée au-dessus d'une cellule d'affichage à cristal liquide 4. La valve optique 2 et la cellule d'affichage à cristal liquide 4 sont montées entre deux polariseurs respectivement avant 6 et arrière 8 dont les directions de polarisation A et B respectives sont croisées. Le polariseur arrière 8 est un polariseur de type transflectif. Autrement dit, ce polariseur arrière 8 est suffisamment réflectif pour pouvoir réfléchir la lumière ambiante qui pénètre dans le dispositif d'affichage 1 par l'avant de celui-ci, tout en étant suffisamment mince pour laisser passer la lumière produite par un dispositif de rétro-éclairage 10 disposé à l'arrière du dispositif d'affichage 1.

La valve optique 2 comprend un substrat avant 12 et un substrat arrière 14 qui s'étendent parallèlement et à distance l'un de l'autre. Les substrats avant 12 et arrière 14 de la valve optique 2 sont réunis entre eux par un cadre de scellement 16 qui délimite un volume 18 pour le confinement d'un cristal liquide 20. La valve optique 2 comprend enfin deux électrodes 22 et 24 structurées respectivement sur la face arrière 12a du substrat avant 12 et sur la face avant 14a du substrat arrière 14.

La cellule d'affichage à cristal liquide 4 présente une structure semblable à celle de la valve optique 2. Elle comprend notamment un substrat avant 26 et un substrat arrière 28 qui s'étendent parallèlement et à distance l'un de l'autre et qui sont réunis entre eux par un cadre de scellement 30. Ce cadre de scellement 30 définit en outre un volume 32 pour le confinement d'un cristal liquide 34. La cellule d'affichage 4 se distingue de la valve optique 2 en ce qu'elle comprend une pluralité d'électrodes 36 et de contre-électrodes 38 par exemple agencées selon un réseau matriciel pour permettre à la cellule d'affichage 4 d'afficher des éléments d'information en modifiant les propriétés optiques du cristal liquide 34 par application d'une tension électrique au point de croisement considéré entre une électrode et une contre-électrode déterminées.

Tel que représenté à la figure 1A, le dispositif d'affichage à cristal liquide 1 selon l'invention est dans un premier état où il présente un contraste d'affichage négatif. En effet, comme cela ressort de la figure 1A, le cristal liquide 20 renfermé dans la valve optique 2 présente un alignement planaire. De même, le cristal liquide 34 renfermé dans la cellule d'affichage 4 présente un alignement planaire en dehors des zones d'affichage et un alignement homéotrope dans les zones d'affichage. On désigne par A et B les directions de polarisation. Comme on peut le constater, ces directions de polarisation sont croisées. Ainsi, la lumière qui pénètre dans le dispositif d'affichage 1 par la face avant de celui-ci est polarisée linéairement par le polariseur A, puis est tournée de 90° dans la valve optique 2 avant d'être encore une fois tournée de 90° dans la cellule d'affichage 4. Finalement, la lumière est absorbée par le polariseur linéaire B. La lumière qui passe au niveau des zones d'affichage de la cellule d'affichage 4, après avoir été polarisée linéairement par le polariseur A, est tournée de 90° dans la valve optique 2, puis traverse la cellule d'affichage 4 sans être modifiée, et est enfin réfléchie par le polariseur linéaire B. Tel que représenté à la figure 1A, le dispositif d'affichage 1 selon l'invention affiche donc les informations en clair sur un fond sombre. Autrement dit, il présente un contraste négatif. Par conséquent, le dispositif d'affichage 1 est dans un état où la lisibilité des informations est optimale quand la cellule d'affichage 4 est éclairée par l'arrière au moyen du dispositif de rétro-éclairage 10. On commute donc le dispositif d'affichage 1 dans cet état lorsqu'il se trouve dans un endroit peu ou pas éclairé.

Tel que représenté à la figure 1B, le dispositif d'affichage 1 se distingue de la situation illustrée à la figure 1A uniquement en ce que le cristal liquide 20 renfermé dans la valve optique 2 présente un alignement homéotrope. En effet, par rapport à la figure 1A, l'orientation du cristal liquide 30 renfermé dans la cellule d'affichage 4 reste inchangée. Ainsi, la lumière qui pénètre dans le dispositif d'affichage 1 par le haut de celui-ci, après avoir été polarisée linéairement par le polariseur A, traverse sans modification la valve optique 2, puis est tournée de 90° en traversant la cellule d'affichage 4. Finalement, la lumière est réfléchie par le polariseur B. La lumière qui passe au niveau des zones d'affichage de la cellule d'affichage 4, après avoir été polarisée linéairement par le polariseur A, traverse sans modification la valve optique 2 et la cellule d'affichage 4 et est finalement absorbée par le polariseur B. Par conséquent, le dispositif d'affichage 1 affiche les informations en sombre sur un fond clair. Autrement dit, il présente un contraste positif. Par conséquent, le dispositif d'affichage 1 est dans un second état où la lisibilité des informations est optimale quand ces informations sont éclairées par la lumière ambiante qui se réfléchit sur le polariseur linéaire arrière B. On commute donc le dispositif d'affichage 1 dans cet état lorsqu'il se trouve dans un endroit modérément à fortement éclairé.

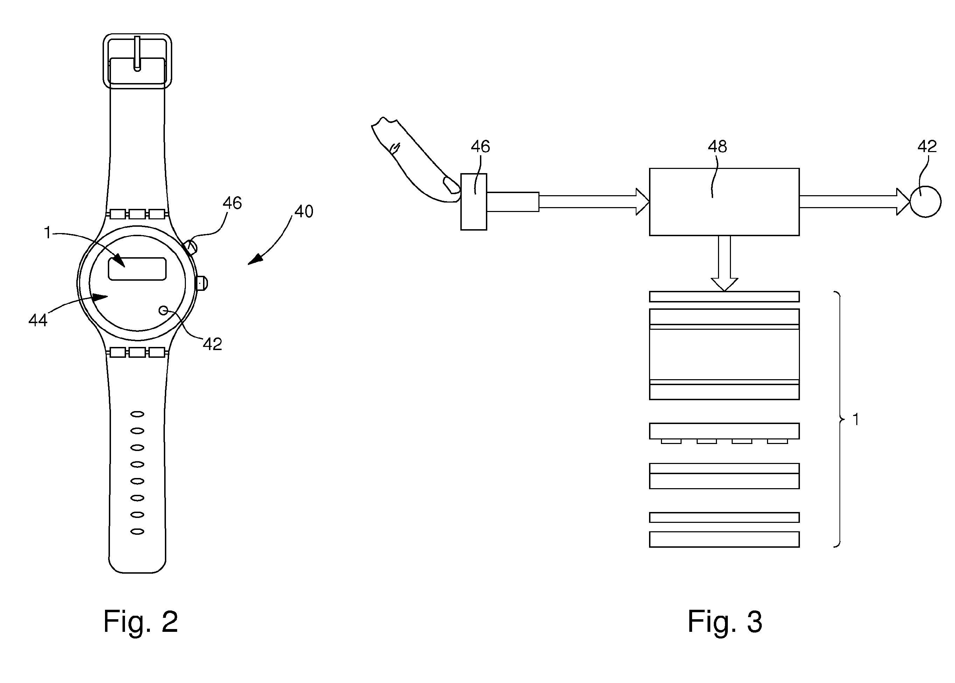

Le dispositif d'affichage à cristal liquide 1 est destiné à équiper tout type d'objet portable tel qu'une pièce d'horlogerie, un téléphone portable ou bien encore un instrument de mesure électronique capable d'afficher des éléments d'information. A titre d'exemple illustratif et non limitatif seulement, on a représenté schématiquement à la figure 2 une pièce d'horlogerie du genre montre-bracelet 40 équipée d'un dispositif à cristal liquide 1 selon l'invention. Ce dispositif est associé à des moyens de mesure de la luminosité ambiante tels qu'un capteur de lumière 42 monté par exemple à la surface du cadran 44 de la montre 40 pour des raisons qui vont être expliquées ci-dessous en liaison avec la figure 3.

Lorsque l'utilisateur veut consulter les informations fournies par le dispositif d'affichage 1 de sa montre 40, il actionne un élément de commande tel qu'un bouton-poussoir 46. En réponse à la pression exercée par l'utilisateur sur le bouton-poussoir 46, une unité de commande 48 va venir mesurer le niveau du signal fourni par le capteur de lumière 42. En fonction de la valeur du signal fourni par le capteur de lumière 42, l'unité de commande 48 va déduire si la montre 40 se trouve dans un endroit fortement éclairé ou pas. Si la montre 40 se trouve dans un endroit fortement éclairé, l'unité de commande 48 va commuter le dispositif d'affichage 1 dans son état où il présente un contraste positif. On a vu en effet ci-dessus que, lorsque le dispositif d'affichage 1 affiche les informations en sombre sur fond clair, la lisibilité de ces informations est optimale lorsqu'elles sont éclairées par la lumière qui se réfléchit sur le polariseur arrière transflectif 8. Au contraire, si la montre 40 se trouve dans un endroit faiblement éclairé, l'unité de commande 48 va commuter le dispositif d'affichage 1 dans son état où il présente un contraste négatif. On a vu en effet ci-dessus que, lorsque le dispositif d'affichage 1 affiche les informations en clair sur un fond sombre, la lisibilité de ces informations est optimale lorsqu'on se trouve dans un endroit qui n'est pas trop fortement éclairé comme un bureau par exemple. Enfin, dans l'obscurité, l'unité de commande 48 va simultanément commander la commutation du dispositif d'affichage 1 dans son état où il présente un contraste négatif et l'allumage du dispositif de rétro-éclairage 10. Selon une variante de réalisation de l'invention, on peut décider que, par défaut, c'est-à-dire en l'absence d'action de l'utilisateur sur le bouton-poussoir 46, le dispositif d'affichage à cristal liquide 1 est dans l'état où il présente un contraste d'affichage négatif, le dispositif de rétro-éclairage 10 étant éteint par souci d'économie d'énergie.

On comprendra que, lorsque le dispositif d'affichage à cristal liquide 1 est dans son premier état de commutation dans lequel il présente un contraste d'affichage négatif, l'unité de commande 48 commande l'allumage du dispositif de rétro-éclairage 10 lorsque la valeur du signal fourni par le capteur de lumière 42 passe en-dessous d'une valeur de consigne.

## Revendications

1. Objet portable comprenant un dispositif d'affichage à cristal liquide transflectif à inversion de contraste, **caractérisé en ce qu'**il comprend des moyens de mesure (42) du degré de luminosité ambiante ainsi qu'une unité de commande (48) qui commande la commutation du dispositif d'affichage à cristal liquide (1) entre son premier état de commutation dans lequel il présente un contraste d'affichage négatif et son second état de commutation dans lequel il présente un contraste d'affichage positif en fonction de la valeur du signal fourni par les moyens de mesure du degré de luminosité ambiante.

2. Objet portable selon la revendication 1, **caractérisé en ce que** l'unité de commande (48) est activée par l'utilisateur.

3. Object portable selon la revendication 2, **caractérisé en ce que**, par défaut, c'est-à-dire en l'absence d'action de l'utilisateur, le dispositif d'affichage à cristal liquide (1) est maintenu dans l'état où il présente un contraste d'affichage négatif.

4. Objet portable selon l'une quelconque des revendication 1 à 3, **caractérisé en ce que**, lorsque le dispositif d'affichage à cristal liquide (1) est dans son premier état de commutation dans lequel il présente un contraste d'affichage négatif, l'unité de commande (48) commande l'allumage du dispositif de rétro-éclairage (10) lorsque la valeur du signal fourni par les moyens de mesure (42) du degré de luminosité ambiante passe en-dessous d'une valeur de consigne.
